# EUROPÄISCHE PATENTANMELDUNG

(11) **EP 1 496 084 A1**
(43) Veröffentlichungstag der Anmeldung: **12.01.2005**
(21) Anmeldenummer: 04102095.9
(22) Anmeldetag: 13.05.2004
(51) Int. Cl.: C08K 5/549, C09D 5/03

(54) **Strahlen härtbare Pulverlackzusammensetzungen und deren Verwendung**

(30) Priorität: 11.07.2003 DE 10331794
(71) Anmelder: Degussa AG, 40474 Düsseldorf (DE)
(72) Erfinder: Wenning, Andreas, 48301, Nottuln (DE); Schmidt, Friedrich Georg, 45721, Haltern am See (DE); Kühnle, Adolf, 45770, Marl (DE); Jost, Carsten, 45770, Marl (DE); Wouters, Marielle, 5591, MZ Heeze (NL); van Bracht, Henk, 5641, GM Eindhoven (NL)

(57) **Zusammenfassung**

Die Erfindung betrifft mit aktinischer Strahlung härtbare Pulverlackzusammensetzungen mit erhöhter Glasübergangstemperatur, deren vemetzte Filme eine verbesserte Hydrophobie aufweisen.

## Beschreibung

Die Erfindung betrifft mit aktinischer Strahlung härtbare Pulverlackzusammensetzungen mit erhöhter Glasübergangstemperatur, deren vernetzte Filme eine erhöhte Hydrophobie aufweisen.

Unter aktinischer Strahlung ist elektromagnetische Strahlung wie Röntgenstrahlung, UV-Strahlung, sichtbares Licht oder nahes IR-Licht (NIR), insbesondere UV-Strahlung, oder Korpuskularstrahlung wie Elektronenstrahlen zu verstehen.

Mit aktinischer Strahlung härtbare Pulverlacke finden zunehmend Interesse. Der Grund liegt in der geringeren thermischen Belastung der Substrate, so dass z. B. auch Holz, Holzwerkstoffe, Kunststoffe oder bestimmte Temperatur sensible Metalle oder Metalllegierungen beschichtet werden können. Zudem weisen UV-Pulverlackfilme durch die Trennung von Schmelz- und Härtungsvorgang eine bessere Oberflächenglätte auf als thermisch härtbare Pulverlacke. Mit aktinischer Strahlung härtbare Pulverlacke werden in zahlreichen Patentschriften beschrieben.

Die EP 667 381 beschreibt feste Zusammensetzungen aus einem Polyglycidylether oder -ester, Gemische aus einem Polyglycidylether oder -ester mit einem Epoxidharz und Gemische aus einem Polyglycidylether oder ―ester mit einem zyklischen Acetal.

Die EP 636 669 und die WO 99/14254 beschreiben zweikomponentige, Strahlen härtbare Pulverlacke auf Basis eines ungesättigten Polyesters und eines Vinylethers.

Das US-Patent 3,974,303 beschreibt thermoplastische Harze, die pro 1000 g des Molekulargewichtes 0,5 bis 3,5 polymerisierbare ungesättigte Gruppen enthalten.

Das US-Patent 5,639,560 beschreibt Strahlen härtbare Pulverzusammensetzungen mit speziellen kristallinen Polyestern, die außerdem Methacrylendgruppen aufweisen, als Bindemittel.

Die EP 934 359 beschreibt pulverförmige Strahlen härtbare Mischungen aus amorphen und kristallinen Polyestern mit terminalen Methacrylatgruppen.

Die EP 1 209 182 und DE 101 63 827 beschreiben Strahlen härtbare Pulverlackzusammensetzungen, die als Bindemittel eine Mischung aus mindestens einem amorphen Urethanacrylat und mindestens einem kristallinen Urethanacrylat enthält.

Die DE 101 63 826 beschreibt UV-Pulverlackzusammensetzungen mit einem amorphen Urethanacrylat als Bindemittel.

Die DE 101 63 825 beschreibt (semi)kristalline Urethanacrylate als Bindemittel für Pulverlacke, die mit aktinischer Strahlung vemetzbar sind.

Die DE 100 63 159 beschreibt bei Raumtemperatur feste Blends aus kristallinen und amorphen Verbindungen mit strahlungsaktivierbaren Gruppen.

Allen mit aktinischer Strahlung härtbaren Pulverlacken ist gemeinsam, dass die Glasübergangstemperatur (Tg) der Pulver, deren Filme sehr gut verlaufen, haften und elastisch sind, nicht befriedigt ist. Zusätzlich besitzen die aus diesen Pulverlacken hergestellten Filme keine hydrophoben Eigenschaften, so dass etwa Wasser und/oder Schmutz nur unzureichend abgewiesen werden.

Aufgabe der vorliegenden Erfindung war es, mit aktinischer Strahlung härtbare Pulverlackzusammensetzungen zu finden, die eine höhere Glasübergangstemperatur (Tg) aufweisen und deren Filme hydrophobe Oberflächeneigenschaften besitzen, ohne die sehr guten mechanischen Filmeigenschaften zu verschlechtern.

Überraschend konnte diese Aufgabe durch eine mit aktinischer Strahlung härtbare Pulverlackzusammensetzung gelöst werden, die eine Verbindung mit funktionalisierten polyedrischen oligomere Silizium-Sauerstoff-Clustereinheiten enthält.

Gegenstand der Erfindung sind Strahlen härtbare Pulverlackzusammensetzungen
enthaltend
I. ein Bindemittel bestehend aus
   mindestens einer mit aktinischer Strahlung vernetzbaren Verbindung;
   und
II. mindestens einer Verbindung, die polyedrische oligomere Silizium-Sauerstoff-
   Clustereinheiten aufweist, gemäß der Formel

   [(RₐX_{b}SiO_{1,5})ₘ (R_{c}X_{d}SiO)ₙ (RₑX_{f}Si₂O_{2,5})ₒ (R_{g}XₕSi₂O₂)ₚ]

   mit a, b, c = 0-1; d =1-2; e,f, g = 0-3; h =1-4; m+n+o+p ≥ 4; a+b =1; c+d = 2; e+f = 3 und g+h = 4;
   **R =** Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
   **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
   wobei die Substituenten vom Typ **R** gleich oder unterschiedlich sind und die Substituenten vom Typ **X** gleich oder unterschiedlich sind und
III. Hilfs- und Zusatzstoffe.

Ebenfalls Gegenstand der Erfindung ist die Verwendung von Zusammensetzungen enthaltend
I. ein Bindemittel bestehend aus
   mindestens einer mit aktinischer Strahlung vernetzbaren Verbindung;
   und
II. mindestens einer Verbindung, die polyedrische oligomere Silizium-Sauerstoff-Clustereinheiten aufweist, gemäß der Formel

   [(RₐX_{b}SiO_{1,5})ₘ (R_{c}X_{d}SiO)ₙ (RₑX_{f}Si₂O_{2,5})ₒ (R_{g}XₕSi₂O₂)ₚ]

   mit a, b, c = 0-1; d =1-2; e,f, g = 0-3; h =1-4; m+n+o+p ≥ 4; a+b =1; c+d = 2; e+f = 3 und g+h = 4;
   **R =** Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
   **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
   wobei die Substituenten vom Typ **R** gleich oder unterschiedlich sind und die Substituenten vom Typ X gleich oder unterschiedlich sind und
III. Hilfs- und Zusatzstoffe.
   zur Herstellung von Strahlen härtbaren Pulverlackzusammensetzungen.

Weiterer Gegenstand der Erfindung ist ein Verfahren zur Herstellung von Strahlen härtbaren Pulverlackzusammensetzungen
enthaltend
I. ein Bindemittel bestehend aus
   mindestens einer mit aktinischer Strahlung vernetzbaren Verbindung;
   und
II. mindestens einer Verbindung, die polyedrische oligomere Silizium-Sauerstoff-Clustereinheiten aufweist, gemäß der Formel

   [(RₐX_{b}SiO_{1,5})ₘ (R_{c}X_{d}SiO)ₙ (RₑX_{f}Si₂O_{2,5})ₒ (R_{g}XₕSi₂O₂)ₚ]

   mit a, b, c = 0-1; d =1-2; e,f, g = 0-3; h =1-4; m+n+o+p ≥ 4; a+b =1; c+d = 2; e+f = 3 und g+h = 4;
   **R =** Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
   **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
   wobei die Substituenten vom Typ **R** gleich oder unterschiedlich sind und die Substituenten vom Typ **X** gleich oder unterschiedlich sind und
III. Hilfs- und Zusatzstoffe.
   bei Einhaltung einer Temperaturobergrenze von 140 °C, in beheizbaren Knetern, insbesondere Extrudern.

Gegenstand der Erfindung ist auch ein Verfahren zur Herstellung von Beschichtungen durch Verwendung von Strahlen härtbaren Pulverlackzusammensetzungen
enthaltend
I. ein Bindemittel bestehend aus
   mindestens einer mit aktinischer Strahlung vernetzbaren Verbindung;
   und
II. mindestens einer Verbindung, die polyedrische oligomere Silizium-Sauerstoff-Clustereinheiten aufweist, gemäß der Formel

   [(RₐX_{b}SiO_{1,5})ₘ (R_{c}X_{d}SiO)ₙ (RₑX_{f}Si₂O_{2,5})ₒ (R_{g}XₕSi₂O₂)ₚ]

   mit a, b, c = 0-1; d =1-2; e,f, g = 0-3; h =1-4; m+n+o+p ≥ 4; a+b =1; c+d = 2; e+f = 3 und g+h = 4;
   **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
   **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
   wobei die Substituenten vom Typ **R** gleich oder unterschiedlich sind und die Substituenten vom Typ **X** gleich oder unterschiedlich sind und
III. Hilfs- und Zusatzstoffe.

Das Bindemittel I besteht aus mindestens einer niedermolekularen, oligomeren oder polymeren Verbindung, die im statistischen Mittel mindestens eine, vorzugsweise mindestens zwei reaktive funktionelle Gruppe(n) mit mindestens einer mit aktinischer Strahlung aktivierbaren Bindung im Molekül enthält. Diese reaktive funktionelle Gruppe wird im Folgenden als strahlungsaktivierbare Gruppe bezeichnet. Die im Bindemittel I vorhandenen strahlungsaktivierbaren Gruppen können gleich oder voneinander verschieden sein. Das Bindemittel I besitzt einen Schmelzpunkt zwischen 50 und 140 °C. Es kann amorph oder (semi)kristallin sein.

Eine mit aktinischer Strahlung aktivierbare Bindung wird bei Bestrahlen mit aktinischer Strahlung reaktiv und geht mit anderen aktivierten Bindungen ihrer Art Polymerisationsreaktionen und/oder Vernetzungsreaktionen ein. Diese Reaktionen laufen nach radikalischem und/oder ionischen Mechanismen ab. Beispiele geeigneter Bindungen sind Kohlenstoff-Wasserstoff-Einzelbindungen oder Kohlenstoff-Kohlenstoff-, Kohlenstoff-Sauerstoff, Kohlenstoff-Stickstoff, Kohlenstoff-Phosphor- oder Kohlenstoff-Silizium-Einzelbindungen oder -Doppelbindungen. Von diesen sind die Kohlenstoff-Kohlenstoff-Doppelbindungen oder Epoxidgruppen besonders vorteilhaft und werden deshalb erfindungsgemäß ganz bevorzugt verwendet. Der Kürze halber werden die Kohlenstoff-Kohlenstoff-Doppelbindungen im folgenden als "Doppelbindungen" bezeichnet.

Demnach enthalten besonders vorteilhafte strahlungsaktivierbare Gruppen eine Doppelbindung oder zwei, drei oder mehr Doppelbindungen. Die Doppelbindungen können konjugiert oder besonders vorteilhaft isoliert sein.

Beispiele gut geeigneter strahlungsaktivierbarer Gruppen sind Acrylat, Methacrylat, Ethacrylat, Cotonat-, Cinnamat-, Vinylether-, Vinylester-, Dicyclopentadienyl-, Norbornenyl-, Isoprenyl-, Isopropenyl-, Allyl- oder Butenylgruppen; - ungesättigte Estergruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen. Besonders gut geeignet sind Acrylat-, Methacrylat-, Vinylether-, Vinylester-, Epoxidgruppen oder a, β- ungesättigte Estergruppen.

Die strahlungsaktivierbaren Gruppen liegen im Bindemittel I lateral und/oder seitenständig vor. Endständige strahlungsaktivierbare Gruppen besitzen in der Regel wegen fehlender sterischer Abschirmung eine höhere Reaktivität als laterale Gruppen. Deshalb werden sie bevorzugt verwendet. Andererseits kann aber die Reaktivität der Bindemittel I über das Verhältnis von endständigen und lateralen Gruppen gezielt gesteuert werden.

Falls das Bindemittel I voneinander verschiedene strahlungsaktivierbare Gruppen besitzt, sind beliebige Kombinationen der strahlungsaktivierbaren Gruppen möglich.

Beispielsweise handelt es sich beim Bindemittel I um ein Urethanacrylat, ein Urethanmethacrylat, einen acrylierten Polyester, einen methacrylierten Polyester, einen Polyester mit Acryl- und Methacrylgruppen, einen ungesättigten Polyester, ein ungesättigtes Polyacrylat, einen Vinylether, einen Urethanvinylether, einen Vinylester, einen Urethanvinylester, einen Polyglycidylether oder einen Polyglycidylester. Diese Verbindungen können amorph als auch (semi)kristallin sein. Auch beliebige Gemische dieser Verbindungen sind möglich.

Diese Verbindungen werden in zahlreichen Patentschriften beschrieben, beispielsweise in EP 0 667 381, USP 3,485,732, EP 0 407 826, EP 0 636 669, WO99/14254, USP 3,974,303, USP 5,639,560, EP 0 934 359, EP 1 209 182, DE 101 63 827, DE 101 63 826, DE 101 63 825 oder DE 100 63 159.

Handelt es sich beispielsweise um ein Urethanacrylat, wie es etwa in der EP 1 209 182 beschrieben wird, wird es aus einem amorphen oder (semi)kristallinen hydroxylgruppenhaltigen Polyester durch Umsetzung mit Polyisocyanaten und einer Verbindung, die gleichzeitig mindestens eine Alkoholgruppe und mindestens eine polymerisationsfähige Acrylatgruppe enthält, hergestellt. Diese Produkte weisen ebenso Urethangruppen wie endständige Acrylatgruppen auf.

Die Verbindung II weist polyedrische oligomere Silizium-Sauerstoff-Clustereinheiten auf, gemäß der Formel

[(RₐX_{b}SiO_{1,5})ₘ (R_{c}X_{d}SiO)ₙ (RₑX_{f}Si₂O_{2,5})ₒ (R_{g}XₕSi₂O₂)ₚ]

mit a, b, c = 0-1; d = 1-2; e,f, g = 0-3; h = 1-4; m+n+o+p ≥ 4; a+b = 1; c+d = 2; e+f = 3 und g+h =4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**, wobei die Substituenten vom Typ **R** gleich oder unterschiedlich sind und die Substituenten vom Typ **X** gleich oder unterschiedlich sind.

Vorzugsweise werden unter einem polyedrischen oligomeren Silizium-Sauerstoff-Cluster die beiden Verbindungsklassen der Silasesquioxane und der Sphärosilikate verstanden.

Silasesquioxane sind oligomere oder polymere Stoffe, deren vollständig kondensierte Vertreter die allgemeinen Formel (SiO_{3/2}R)ₙ besitzen, wobei n ≥ 4 und der Rest R ein Wasserstoffatom sein kann, meist jedoch einen organischen Rest darstellt. Die kleinste Struktur eines Silasesquioxans ist der Tetraeder. Voronkov und Lavrent'yev (Top. Curr. Chem. **102** (1982), 199 - 236) beschreiben die Synthese von vollständig kondensierten und unvollständig kondensierten oligomeren Silasesquioxanen durch hydrolytische Kondensation trifunktioneller RSiY₃-Vorstufen, wobei R für einen Kohlenwasserstoffrest steht und Y eine hydrolisierbare Gruppe, wie z. B. Chlorid, Alkoxid oder Siloxid darstellt. Lichtenhan et al. beschreiben die basenkatalysierte Herstellung von oligomeren Silasesquioxanen (WO 01/10871). Der Einsatz von Silasesquioxanen der Formel R₈Si₈O₁₂ (mit gleichen oder unterschiedlichen Kohlenwasserstoffresten R) können basenkatalysiert zu funktionalisierten, unvollständig kondensierten Silasesquioxanen, wie z. B. R₇Si₇O₉(OH)₃ oder auch R₈Si₈O₁₁(OH)₂ und R₈Si₈O₁₀(OH)₄ umgesetzt werden (Chem. Commun. (1999), 2309-10; Polym. Mater. Sci. Eng. **82** (2000), 301-2; WO 01/10871) und damit als Stammverbindung für eine Vielzahl verschiedener unvollständig kondensierter und funktionalisierter Silasesquioxane dienen. Insbesondere die Silasesquioxane (Trisilanole) der Formel R₇Si₇O₉(OH)₃ lassen sich durch Umsetzung mit funktionalisierten, monomeren Silanen (corner capping) in entsprechend modifizierte oligomere Silasesquioxane überführen.

Wenn es sich bei der polyedrischen oligomeren Silizium-Sauerstoff-Cluster aufweisenden Verbindung II um die Verbindungsklasse der Silasesquioxane handelt, besitzen sie folgende Formel

[(RₐX_{b}SiO_{1,5})ₘ (R_{c}X_{d}SiO)ₙ]

mit a, b, c = 0-1; d = 1-2; m+n ≥ 4; a+b =1; c+d = 2.

Bevorzugt sind Verbindungen, die funktionalisiert sind und deren funktionalisierte polyedrische oligomere Silizium-Sauerstoff-Clustereinheit im Wesentlichen auf der Struktur **1** 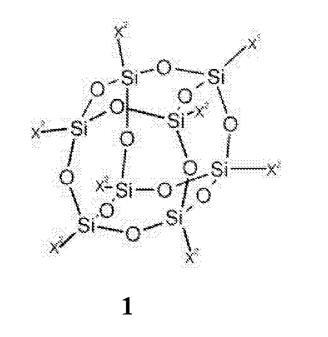 basiert,
mit **X**^{**1**} = Substituent vom Typ **X** oder vom Typ **-O-SiX**_{**3**}**, X**^{**2**} = Substituent vom Typ **X,** vom Typ **-O-SiX**_{**3**}**,** vom Typ **R,** vom Typ **-O-SiX**_{**2**}**R,** vom Typ **-O-SiXR**_{**2**} oder vom Typ **-O-SiR**_{**3**}**,**
**R =** Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**.

Bevorzugt sind auch Verbindungen, die im Wesentlichen auf der funktionalisierten oligomeren Silasesquioxaneinheit der Struktur **2, 3** oder **4** basieren, 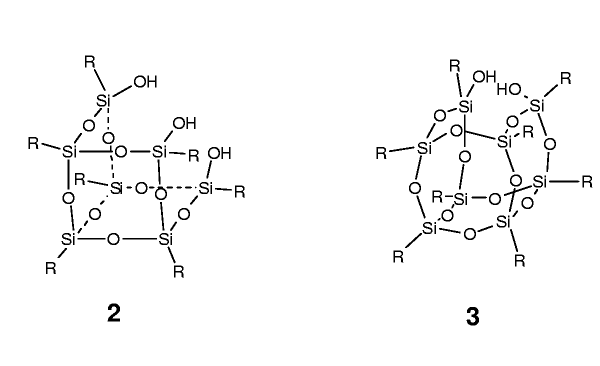 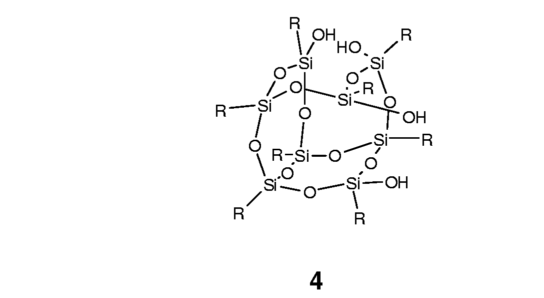 mit **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte oligomere Silasesquioxaneinheiten, die über eine Polymereinheit oder eine Brückeneinheit angebunden sind, wobei die Silasesquioxaneinheit über mindestens eine Hydroxylgruppe funktionalisiert ist.

Die Substituenten vom Typ **R** der Silasesquioxaneinheiten können alle identisch sein, daraus ergibt sich eine sogenannte funktionalisierte homoleptische Struktur gemäß

[(RSiO_{1,5})ₘ (RXSiO)ₙ]

mit m + n = z und z ≥ 4, wobei z der Anzahl der Siliziumatome in der Gerüststruktur der polyedrischen oligomeren Silizium-Sauerstoff-Clustereinheit entspricht und **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
- **X** =: Oxy-, Hydroxy-, Alkoxy-, Carboxy-, Silyl-, Alkylsilyl-, Alkoxysilyl-, Siloxy-, Alkylsiloxy, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R,** wobei die Substituenten vom Typ **R** gleich oder unterschiedlich sind und die Substituenten vom Typ **X** gleich oder unterschiedlich sind, basiert.

In einer weiteren Ausführungsform des Vernetzers können mindesten zwei der Substituenten vom Typ **R** verschieden sein, man spricht dann von einer funktionalisierten heteroleptischen Struktur des Vernetzers gemäß

[(RSiO_{1,5})ₘ (R'XSiO)ₙ]

mit m + n = z und z ≥ 4, wobei z der Anzahl der Siliziumatome in der Gerüststruktur der polyedrischen oligomeren Silizium-Sauerstoff-Clustereinheit entspricht und **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
- **X =**: Oxy-, Hydroxy-, Alkoxy-, Carboxy-, Silyl-, Alkylsilyl-, Alkoxysilyl-, Siloxy-, Alkylsiloxy, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R,** wobei die Substituenten vom Typ **R** gleich oder unterschiedlich sind und die Substituenten vom Typ **X** gleich oder unterschiedlich sind, basiert.

Ganz besonders bevorzugt sind funktionalisierte oligomere Silasesquioxane der Struktur 5 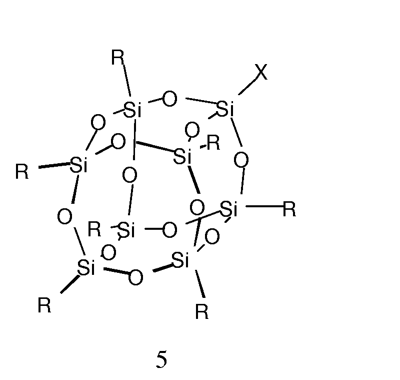 mit **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind.

Ebenfalls besonders bevorzugt sind Verbindungen, deren polyedrische oligomere Silizium-Sauerstoff-Clustereinheiten nicht funktionalisierte oligomere Silasesquioxaneinheiten sind.

Oligomere Sphärosilikate sind ähnlich aufgebaut wie die oligomeren Silasesquioxane. Auch sie besitzen eine "käfigartige" Struktur. Im Unterschied zu den Silasesquioxanen, bedingt durch ihre Herstellungsmethode, sind die Siliziumatome an den Ecken eines Sphärosilikates mit einem weiteren Sauerstoffatom verbunden, welches wiederum weiter substituiert ist. Oligomere Sphärosilikate lassen sich durch Silylierung geeigneter Silikat-Vorstufen herstellen (D. Hoebbel, W. Wieker, Z. Anorg. Allg. Chem. **384** (1971), 43-52; P. A. Agaskar, Colloids Surf. **63** (1992), 131-8; P. G. Harrison, R. Kannengiesser, C. J. Hall, J. Main Group Met. Chem. **20** (1997), 137-141; R. Weidner, Zeller, B. Deubzer, V. Frey, Ger. Offen. (1990), DE 38 37 397).

So kann beispielsweise das Sphärosilikat mit der Struktur 7 aus der Silikat-Vorstufe der Struktur 6 synthetisiert werden, welche ihrerseits über die Umsetzung von Si(OEt)₄ mit Cholinsilikat bzw. durch die Umsetzung von Abfallprodukten der Reisernte mit Tetramethylammoniumhydroxid zugänglich ist (R. M. Laine, I. Hasegawa, C. Brick, J. Kampf, Abstracts of Papers, 222nd ACS National Meeting, Chicago, IL, United States, August 26-30, 2001, MTLS-018).

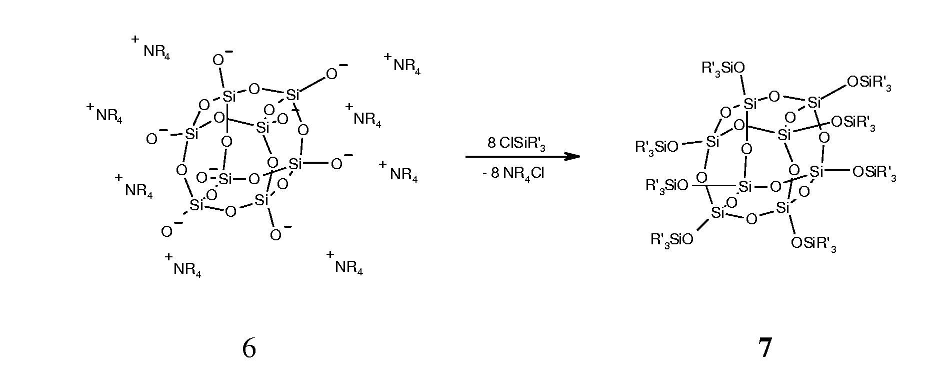

Wenn es sich bei der polyedrischen oligomeren Silizium-Sauerstoff-Cluster aufweisenden Verbindung II um die Verbindungsklasse der Sphärosilikate handelt, besitzen sie folgende Formel

[(RₑX_{f}Si₂O_{2,5})ₒ (R_{g}XₕSi₂O₂)ₚ]

mit e, f, g = 0-3; h = 1-4; o+p ≥ 4; e+f = 3 und g+h = 4.

Bevorzugt sind Verbindungen, deren polyedrische oligomere Silizium-Sauerstoff-Clustereinheiten funktionalisierte oligomere Sphärosilikateinheiten sind.

Ebenfalls bevorzugt sind Verbindungen, deren polyedrische oligomere Silizium-Sauerstoff-Clustereinheiten nicht funktionalisierte oligomere Sphärosilikateinheiten sind.

Sowohl die Silasesquioxane als auch die Sphärosilikate sind bei Temperaturen bis zu mehreren hundert Grad Celsius thermisch stabil.

Besonders bevorzugt wird die Verbindungsklasse der Silasesquioxane eingesetzt.

Weitere Informationen über die funktionalisierten polyedrischen oligomeren Silizium-Sauerstoff-Clustereinheiten aufweisenden Verbindungen II, z. B. über ihre Synthese, werden z. B. in der DE 102 20 853.0, DE 102 20 853.0 und DE 103 01 754.2 beschrieben.

Zur Strahlenhärtung der erfindungsgemäßen Pulverlackzusammensetzung sind elektromagnetische Strahlung wie Röntgenstrahlung, UV-Strahlung, sichtbares Licht oder nahes IR-Licht (NIR), insbesondere UV-Strahlung, oder Korpuskularstrahlung wie Elektronenstrahlen geeignet.

Werden beschleunigte Elektronenstrahlen verwendet, werden aus der Pulverlackzusammensetzung freie Radikale in einer Anzahl generiert, die eine extrem schnelle Polymerisation der reaktiven Acrylatgruppen gewährleistet. Bevorzugt werden Strahlungsdosen von 5 bis 15 Mrad verwendet.

Im Falle der UV-Härtung werden als weitere erforderliche Einsatzstoffe III UV-Initiatoren verwendet, die prinzipiell bekannt sind aus herkömmlichen flüssigen UV-härtenden Systemen, z. B. EP 633 912. Dies sind Stoffe, die bei Bestrahlung mit UV-Licht in Radikale zerfallen und damit die Polymerisation starten. Als UV-Initiatoren kommen in Frage z. B. 2,2'-Diethoxyacetophenon, Hydroxycyclohexylphenylketon, Benzophenon, 2-Hydroxy-2-methyl-1-phenylpropan-1-on, Xanthon, Thioxanthon, Benzildimethylketal, usw. Solche UV-Initiatoren werden kommerziell angeboten, z. B. IRGACURE 184 oder DEGACURE 1173 von Ciba. Der Anteil des Photoinitiators am Gesamtsystem beträgt etwa 0,5 bis 5 Gew.-%.

Der Einsatz von Initiatoren, z. B. Thioxanthone, Phosphinoxide, Metallocene, tertiäre Aminobenzole oder tertiäre Aminobenzophenone, die bei Bestrahlung mit sichtbarem Licht in Radikale zerfallen, ist ebenso möglich.

Optionale Zusatzstoffe III sind acrylat- oder methacrylathaltige Verbindungen, wie z. B. das Triacrylat von Tris(2-hydroxyethyl)isocyanurat (SR 386, Sartomer), und Haftvermittler, die in untergeordneten Anteilen von 0 - 20 Gew.-% eingesetzt werden können, um die Beschichtungseigenschaften zu modifizieren.

Weitere bei Pulverlacken übliche Zusatzstoffe III sind Verlaufmittel, Lichtstabilisatoren, und Entgasungsmittel. Diese können in 0 - 5 Gew.-% verwendet werden. Außerdem möglich ist der Einsatz von Pigmenten und Füllern, z. B. Metalloxide wie Titandioxid, und Metallhydroxide, Sulfate, Sulfide, Carbonate, Silicate, Talkum, Ruß usw. in Gewichtsanteilen von 0 - 50 %.

Zur Herstellung der gebrauchsfertigen Pulverlackzusammensetzung werden die Einsatzstoffe vermischt. Die Homogenisierung der Einsatzstoffe kann in geeigneten Aggregaten, wie z. B. beheizbaren Knetern, vorzugsweise jedoch durch Extrudieren, erfolgen, wobei Temperaturobergrenzen von 140 °C, bevorzugt von 120 - 130 °C, nicht überschritten werden sollten. Die extrudierte Masse wird nach Abkühlen auf Raumtemperatur und nach geeigneter Zerkleinerung zum sprühfertigen Pulver ohne Zusatz von Kühlmitteln vermahlen. Das Auftragen des sprühfertigen Pulvers auf geeignete Substrate kann nach den bekannten Verfahren, wie z. B. durch elektro- oder tribostatisches Pulversprühen, Wirbelsintern oder elektrostatisches Wirbelsintern erfolgen. Geeignete Substrate sind z. B. unbehandelte oder vorbehandelte metallische Substrate, Holz, Holzwerkstoffe, Kunststoffe, Glas oder Papier.

Die erfindungsgemäßen Pulverlackzusammensetzungen haben eine erhöhte Glasübergangstemperatur. Die aus den erfindungsgemäßen Pulverlackzusammensetzungen hergestellten Beschichtungen sind flexibel, hart, gut haftend und besitzen eine hydrophobe Oberfläche. Gegenstand der Erfindung sind auch Beschichtungen der beschriebenen Art.

Die Erfindung wird durch die folgenden Beispiele näher erläutert:

### Beispiele:

### 1. Herstellvorschrift des amorphen Urethanacrylats

65 kg Isophthalsäure, 6 kg Monoethylenglykol, 19 kg Neopentylglykol und 26 kg Cyclohexandimethanol wurden mit 0,2 Massenprozente n-Butylzinntrioctonoat versetzt und in einer mit einer Destillationskolonne versehenen Apparatur unter Stickstoff und Rühren auf 190 °C erhitzt. Diese Temperatur wurde im Laufe der Wasserabscheidung langsam auf 230 °C erhöht. Nachdem etwa 98 % der theoretischen Wassermenge abdestilliert worden waren, wurde das Produkt bei 120 °C portionsweise unter kräftigen Rühren zu einer Mischung aus 3,2 kg eines 1 : 1-Adduktes aus IPDI und Hydroxyethylacrylat, 0,7 kg IONOL CP und 0,2 kg Dibutylzinndilaurat gegeben. Nach etwa einer Stunde Rühren lag der NCO-Gehalt unter 0,1%. Die heiße Reaktionsmischung wurde aus dem Kolben auf eine Folie gegossen. Sobald die Reaktionsmasse erstarrt und abgekühlt war, wurde sie mechanisch zerkleinert und gemahlen. Der Schmelzbereich dieses Produktes lag bei 82 bis 86 °C.

### 2. Herstellung des kristallinen Urethanacrylates

230 kg Dodecandisäure und 66 kg Monoethylenglykol wurden mit 0,2 Massenprozente n-Butylzinntrioctonoat versetzt und in einer mit einer Destillationskolonne versehenen Apparatur unter Stickstoff und Rühren auf 190 °C erhitzt. Diese Temperatur wurde im Laufe der Wasserabscheidung langsam auf 230 °C erhöht. Nachdem etwa 98 % der theoretischen Wassermenge abdestilliert worden waren, wurde das Produkt bei 120 °C portionsweise unter kräftigen Rühren zu einer Mischung aus 63 kg eines 1 : 1-Adduktes aus IPDI und Hydroxyethylacrylat, 3,2 kg IONOL CP und 0,6 kg Dibutylzinndilaurat gegeben. Nach etwa einer Stunde Rühren lag der NCO-Gehalt unter 0,1 %. Die heiße Reaktionsmischung wurde aus dem Kolben auf eine Folie gegossen. Sobald die Reaktionsmasse erstarrt und abgekühlt war, wurde sie mechanisch zerkleinert und gemahlen. Der Schmelzpunkt dieses Produktes lag bei 77 °C.

### 3. Herstellung des Silasesquioxans (Isobutyl)₈Si₈O₁₂

Zu einer Lösung von 446 g Isobutyltrimethoxysilan (Isobutyl)Si(OMe)₃ in 4300 ml Aceton wird unter Rühren eine Lösung von 6.4 g KOH in 200 ml H₂O gegeben. Das Reaktionsgemisch wird daraufhin 3 Tage bei 30 °C gerührt. Der entstehende Niederschlag wird abfiltriert und bei 70 °C im Vakuum getrocknet. Das Produkt (Isobutyl)₈Si₈O₁₂ wird in einer Ausbeute von 262 g (96 %) erhalten.

### 4. Herstellung der erfindungsgemäßen Pulverlackzusammensetzungen

850 g des amorphen Urethanacrylates aus Beispiel 1 und 150 g des kristallinen Urethanacrylates aus Beispiel 2 wurden mit 7 g BYK 361 (Verlaufmittel, BYK Chemie), 10 g Worlée Add 900 (Entgasungsmittel, Worlée-Chemie), 10 g EBECRYL 170 (Haftvermittler, UCB), 10 g Irgacure 2959 (Fotoinitiator, Ciba Specialty Chemicals) und 50 Teile des Silasesquioxans (Isobutyl)₈Si₈O₁₂ aus Beispiel 3 versetzt. Die zerkleinerten Einsatzstoffe wurden in einem Kollergang innig vermischt und anschließend im Extruder bis maximal 130 °C homogenisiert. Nach dem Erkalten wurde das Extrudat gebrochen und mit einer Stiftsmühle im Falle des Vergleichsversuchs mit und im Falle des erfindungsgemäßen Beispiels ohne Zusatz von Kühlmitteln (flüssiger Stickstoff oder Trockeneis) auf eine Korngröße < 100 µm gemahlen. Das so hergestellte Pulver wurde mit einer elektrostatischen Pulverspritzanlage bei 60 KV auf entfettete, Normalstahlbleche und auf MDF-Platten (Mitteldichte Faserplatten) appliziert. Dann wurde unter IR-Bestrahlung aufgeschmolzen und mit Hilfe von UV-Strahlen (Hg-Lampe, ca. 3000 mJ/cm²) ausgehärtet.

### 5. Herstellung der Pulverlackzusammensetzung ohne Silasesquioxan (Vergleich)

Die Pulverlackzusammensetzung wurde analog zur erfindungsgemäßen Pulverlackzusammensetzung aus Beispiel 4 hergestellt. Es wurde nur auf die Zugabe des Silasesquioxans (Isobutyl)₈Si₈O₁₂ aus Beispiel 3 verzichtet.

Die Prüfwerte sind in der Tabelle 1 zusammengefasst:

**Tabelle 1**

| Beispiel | Tg Pulver¹(°C) | Substrat | HK²[sec] | ET³[mm] | Kugelschlag d./i.⁴ [inchElb] | GS⁵ | Kontaktwinkel⁶[°] |
|---|---|---|---|---|---|---|---|
| 4 | 30 | Normalstahl | 172 | > 10 | > 80 / > 80 | 0 | 115 |
| 4 | 30 | MDF | 146 | - | - | 0 | 115 |
| 5 (Vergleich) | 20 | Normalstahl | 173 | > 10 | > 80 / > 80 | 0 | 94 |
| 5 (Vergleich) | 20 | MDF | 157 | - | - | 0 | 94 |

| | | | | | | | |
|---|---|---|---|---|---|---|---|
| 1: Glasübergangstemperatur (DSC) | | | | | | | |
| 2: Härte nach König (DIN 53 157) | | | | | | | |
| 3: Erichsentiefung (DIN 53 156) | | | | | | | |
| 4: Schlagtiefung direkt /indirekt (ASTM D 2794-93) | | | | | | | |
| 5: Gitterschnitt (DIN 53153, ISO 2409) (Skala 0 (kein Haftungsverlust) bis 5 (totaler Haftungsverlust)) | | | | | | | |
| 6: Kontaktwinkel am 60 µl Wassertropfen | | | | | | | |

Die erfindungsgemäße Pulverlackzusammensetzung aus Beispiel 4 weist durch die Zugabe des Silasesquioxans eine höhere Glasübergangstemperatur auf. Die Oberfläche des vernetzten Films ist hydrophob. Dadurch besitzt die Pulverbeschichtung einen Wasser abweisenden Effekt. Die mechanischen Beschichtungseigenschaften wie Härte, Flexibilität und Haftung werden durch das Silasesquioxan nicht beeinflusst. Sie belieben auf dem sehr hohen Niveau. Das nicht erfindungsgemäße Vergleichsbeispiel 5 weist insbesondere Schwächen in der Mahlbarkeit des Pulvers sowie in der Hydrophobie der Beschichtung auf.

## Patentansprüche

1. Strahlen härtbare Pulverlackzusammensetzung
enthaltend
I. ein Bindemittel bestehend aus
mindestens einer mit aktinischer Strahlung vernetzbaren Verbindung;
und
II. mindestens einer Verbindung, die polyedrische oligomere Silizium-Sauerstoff-Clustereinheiten aufweist, gemäß der Formel
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
mit a, b, c = 0-1; d = 1-2; e,f, g = 0-3; h = 1-4; m+n+o+p ≥ 4; a+b =1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind
und
III. Hilfs- und Zusatzstoffe.

2. Strahlen härtbare Pulverlackzusammensetzung nach Anspruch 1,
**dadurch gekennzeichnet,**
**dass** das Bindemittel I aus mindestens einer Verbindung, die im statistischen Mittel mindestens eine, vorzugsweise mindestens zwei reaktive funktionelle Gruppe(n) mit mindestens einer mit aktinischer Strahlung aktivierbaren Bindung im Molekül enthält, besteht.

3. Strahlen härtbare Pulverlackzusammensetzung nach mindestens einem der vorherigen Ansprüche,
**dadurch gekennzeichnet,**
**dass** das Bindemittel I aus mindestens einer Verbindung besteht, die niedermolekular und/oder oligomer und/oder polymer ist.

4. Strahlen härtbare Pulverlackzusammensetzung nach mindestens einem der vorherigen Ansprüche,
**dadurch gekennzeichnet,**
**dass** es sich bei den mit aktinischer Strahlung aktivierbaren Bindungen um Kohlenstoff-Wasserstoff-Einzelbindungen oder Kohlenstoff-Kohlenstoff-, Kohlenstoff-Sauerstoff, Kohlenstoff-Stickstoff, Kohlenstoff-Phosphor- oder Kohlenstoff-Silizium-Einzelbindungen und/oder -Doppelbindungen handelt.

5. Strahlen härtbare Pulverlackzusammensetzung nach mindestens einem der vorherigen Ansprüche,
**dadurch gekennzeichnet,**
**dass** die reaktiven funktionellen Gruppen ausgewählt werden aus der Gruppe, bestehend aus Acrylat-, Methacrylat-, Ethacrylat-, Cotonat-, Cinnamat-, Vinylether-, Vinylester-, Dicyclopentadienyl-, Norbornenyl-, Isoprenyl-, Isopropenyl-, Allyl-, Butenylgruppen, ungesättigte Estergruppen, Dicyclopentadienyl-, Norbornenyl-, Isoprenyl-, Isopropenyl-, Allyl-, Butenylethergruppen, Dicyclopentadienyl-, Norbornenyl-, Isoprenyl-, Isopropenyl-, Allyl- oder Butenylestergruppen.

6. Strahlen härtbare Pulverlackzusammensetzung nach mindestens einem der vorherigen Ansprüche,
**dadurch gekennzeichnet,**
**dass** die reaktiven funktionellen Gruppen ausgewählt werden aus der Gruppe, bestehend aus Acrylat-, Methacrylat-, Vinylether-, Vinylester-, Epoxidgruppen oder a,β-ungesättigte Estergruppen.

7. Strahlen härtbare Pulverlackzusammensetzung nach mindestens einem der vorherigen Ansprüche,
**dadurch gekennzeichnet,**
**dass** die reaktiven funktionellen Gruppen lateral und/oder seitenständig im Bindemittel I vorliegen.

8. Strahlen härtbare Pulverlackzusammensetzung nach mindestens einem der vorherigen Ansprüche,
**dadurch gekennzeichnet,**
**dass** es sich bei dem Bindemittel I um ein Urethanacrylat, ein Urethanmethacrylat, einen acrylierten Polyester, einen methacrylierten Polyester, einen Polyester mit Acryl- und Methacrylgruppen, einen ungesättigten Polyester, ein ungesättigtes Polyacrylat, einen Vinylether, einen Urethanvinylether, einen Vinylester, einen Urethanvinylester, einen Polyglycidylether und/oder einen Polyglycidylester handelt.

9. Strahlen härtbare Pulverlackzusammensetzung nach mindestens einem der vorherigen Ansprüche,
**dadurch gekennzeichnet,**
**dass** das Bindemittel I amorph ist.

10. Strahlen härtbare Pulverlackzusammensetzung nach mindestens einem der vorherigen Ansprüche,
**dadurch gekennzeichnet,**
**dass** das Bindemittel I (semi)kristallin ist.

11. Strahlen härtbare Pulverlackzusammensetzung nach mindestens einem der vorherigen Ansprüche,
**dadurch gekennzeichnet,**
**dass** das Bindemittel I ein amorphes und/oder (semi)kristallines Urethanacrylat ist, aufgebaut durch Reaktion der Komponenten:
a) mindestens ein amorpher und/oder (semi)kristalliner hydroxylgruppenhaltiger Polyester,
b) mindestens ein Polyisocyanat,
c) mindestens eine Verbindung mit mindestens einer Alkoholgruppe und mindestens einer polymerisationsfähigen Acrylatgruppe.

12. Strahlen härtbare Pulverlackzusammensetzung nach mindestens einem der vorherigen Ansprüche,
**dadurch gekennzeichnet,**
**dass** die polyedrische oligomere Silizium-Sauerstoff-Clustereinheit funktionalisiert ist, wobei X eine funktionelle Gruppe aufweist.

13. Strahlen härtbare Pulverlackzusammensetzung nach mindestens einem der vorherigen Ansprüche,
**dadurch gekennzeichnet,**
**dass** mindestens einer der Substituenten vom Typ **X** eine Aminogruppe aufweist.

14. Strahlen härtbare Pulverlackzusammensetzung nach mindestens einem der vorherigen Ansprüche,
**dadurch gekennzeichnet,**
**dass** mindestens einer der Substituenten vom Typ **X** eine Isocyanat- oder eine blockierte Isocyanatgruppe aufweist.

15. Strahlen härtbare Pulverlackzusammensetzung nach mindestens einem der vorherigen Ansprüche,
**dadurch gekennzeichnet,**
**dass** mindestens einer der Substituenten vom Typ **X** eine Acrylat- oder eine Methacrylatgruppe aufweist.

16. Strahlen härtbare Pulverlackzusammensetzung nach mindestens einem der vorherigen Ansprüche,
**dadurch gekennzeichnet,**
**dass** mindestens einer der Substituenten vom Typ **X** eine Alkoxysilyl- oder eine Alkoxysilylalkylgruppe aufweist.

17. Strahlen härtbare Pulverlackzusammensetzung nach mindestens einem der vorherigen Ansprüche,
**dadurch gekennzeichnet,**
**dass** mindestens einer der Substituenten vom Typ **X** eine Epoxygruppe aufweist.

18. Strahlen härtbare Pulverlackzusammensetzung nach mindestens einem der vorherigen Ansprüche,
**dadurch gekennzeichnet,**
**dass** mindestens einer der Substituenten vom Typ **X** eine Hydroxygruppe aufweist.

19. Strahlen härtbare Pulverlackzusammensetzung nach mindestens einem der vorherigen Ansprüche ,
**dadurch gekennzeichnet,**
**dass** mindestens zwei der Substituenten vom Typ **X** sind.

20. Strahlen härtbare Pulverlackzusammensetzung nach mindestens einem der vorherigen Ansprüche,
**dadurch gekennzeichnet,**
**dass** mindestens zwei der Substituenten vom Typ **X** gleich sind.

21. Strahlen härtbare Pulverlackzusammensetzung nach mindestens einem der vorherigen Ansprüche,
**dadurch gekennzeichnet,**
**dass** die funktionalisierte polyedrische oligomere Silizium-Sauerstoff-Clustereinheit im Wesentlichen auf der Struktur **1** 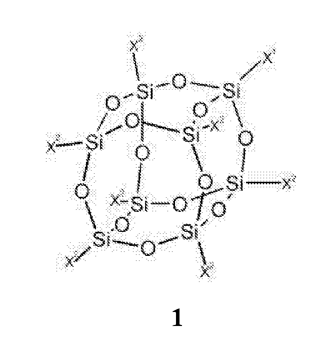 basiert,
mit **X**^{**1**} = Substituent vom Typ **X** oder vom Typ **-O-SiX**_{**3**}**, X**^{**2**} = Substituent vom Typ **X,** vom Typ **-O-SiX**_{**3**}**,** vom Typ **R,** vom Typ **-O-SiX**_{**2**}**R,** vom Typ **-O-SiXR**_{**2**} oder vom Typ **-O-SiR**_{**3**}**.**

22. Strahlen härtbare Pulverlackzusammensetzung nach mindestens einem der vorherigen Ansprüche,
**dadurch gekennzeichnet,**
**dass** die funktionalisierte polyedrische oligomere Silizium-Sauerstoff-Clustereinheit eine funktionalisierte oligomere Silasesquioxaneinheit ist.

23. Strahlen härtbare Pulverlackzusammensetzung nach mindestens einem der vorherigen Ansprüche,
**dadurch gekennzeichnet,**
**dass** die Silasesquioxaneinheit eine funktionalisierte homoleptische Struktur aufweist, wobei alle Substituenten vom Typ **R** gleich sind.

24. Strahlen härtbare Pulverlackzusammensetzung nach mindestens einem der vorherigen Ansprüche,
**dadurch gekennzeichnet,**
**dass** die Silasesquioxaneinheit eine funktionalisierte heteroleptische Struktur aufweist, wobei mindestens zwei der Substituenten vom Typ **R** unterschiedlich sind.

25. Strahlen härtbare Pulverlackzusammensetzung nach mindestens einem der vorherigen Ansprüche,
**dadurch gekennzeichnet,**
**dass** die funktionalisierte oligomere Silasesquioxaneinheit durch eine Umsetzung von Silasesquioxaneinheiten mit freien Hydroxygruppen mit monomeren funktionalisierten Silanen der Struktur **Y**_{**3**}**Si-X**^{**1**}**, Y**_{**2**}**SiX**^{**1**}**X**^{**2**} und **YSiX**^{**1**}**X**^{**2**}**X**^{**3**} erhalten wird, wobei der Substituent **Y** eine Abgangsgruppe ist, ausgewählt aus Alkoxy-, Carboxy-, Halogen-, Silyloxy- oder Aminogruppe, die Substituenten **X**^{**1**}**, X**^{**2**} und **X**^{**3**} vom Typ **X** sind und gleich oder unterschiedlich sind.

26. Strahlen härtbare Pulverlackzusammensetzung nach mindestens einem der vorherigen Ansprüche,
**dadurch gekennzeichnet,**
**dass** die funktionalisierte oligomere Silasesquioxaneinheit im Wesentlichen auf der Struktur **2, 3** oder **4** basiert,

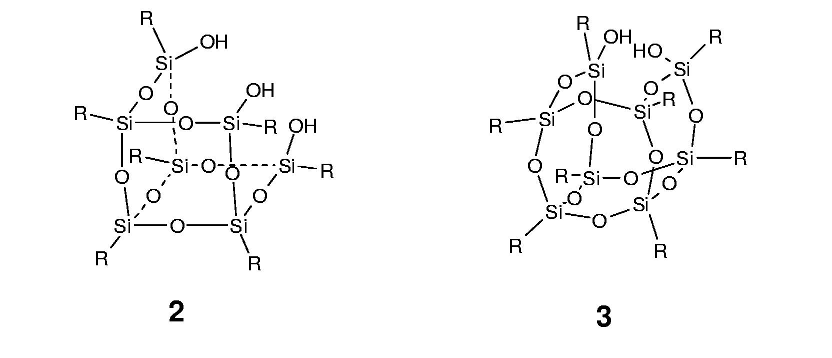

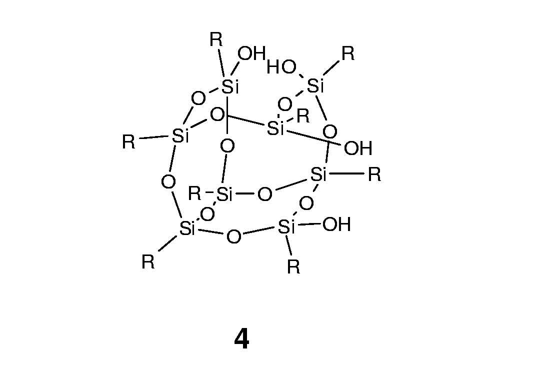

27. Strahlen härtbare Pulverlackzusammensetzung nach mindestens einem der vorherigen Ansprüche,
**dadurch gekennzeichnet,**
**dass** die funktionalisierte oligomere Silasesquioxaneinheit im Wesentlichen auf der Struktur 5 basiert, 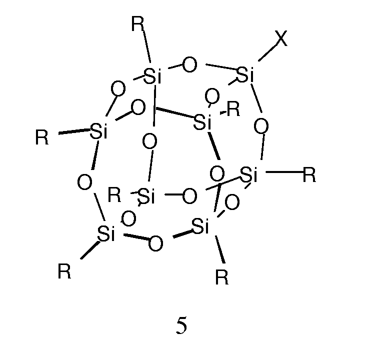 mit **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind.

28. Strahlen härtbare Pulverlackzusammensetzung nach mindestens einem der vorherigen Ansprüche,
**dadurch gekennzeichnet,**
**dass** die polyedrische oligomere Silizium-Sauerstoff-Clustereinheit eine nicht funktionalisierte oligomere Silasesquioxaneinheit ist.

29. Strahlen härtbare Pulverlackzusammensetzung nach mindestens einem der vorherigen Ansprüche,
**dadurch gekennzeichnet,**
**dass** die funktionalisierte polyedrische oligomere Silizium-Sauerstoff-Clustereinheit eine funktionalisierte oligomere Sphärosilikateinheit ist.

30. Strahlen härtbare Pulverlackzusammensetzung nach mindestens einem der vorherigen Ansprüche,
**dadurch gekennzeichnet,**
**dass** die polyedrische oligomere Silizium-Sauerstoff-Clustereinheit eine nicht funktionalisierte oligomere Sphärosilikateinheit ist.

31. Strahlen härtbare Pulverlackzusammensetzung nach mindestens einem der vorherigen Ansprüche,
**dadurch gekennzeichnet,**
**dass** als Hilfs- und Zusatzstoffe UV-Initiatoren, Verlaufmittel, Lichtstabilisatoren, Entgasungsmittel, Pigmente, Füllstoffe, Haftvermittler oder weitere acrylat- und/oder methacrylathaltige Verbindungen enthalten sind.

32. Verwendung einer Zusammensetzung enthaltend
I. ein Bindemittel bestehend aus
mindestens einer mit aktinischer Strahlung vernetzbaren Verbindung;
und
II. mindestens einer Verbindung, die polyedrische oligomere Silizium-Sauerstoff-Clustereinheiten aufweist, gemäß der Formel
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
mit a, b, c = 0-1; d = 1-2; e,f, g = 0-3; h = 1-4; m+n+o+p ≥ 4; a+b =1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind
und
III. Hilfs- und Zusatzstoffe.
zur Herstellung von Strahlen härtbaren Pulverlacken.

33. Verfahren zur Herstellung einer Strahlen härtbaren Pulverlackzusammensetzung enthaltend
I. ein Bindemittel bestehend aus
mindestens einer mit aktinischer Strahlung vernetzbaren Verbindung;
und
II. mindestens einer Verbindung, die polyedrische oligomere Silizium-Sauerstoff-Clustereinheiten aufweist, gemäß der Formel
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
mit a, b, c = 0-1; d = 1-2; e,f, g = 0-3; h = 1-4; m+n+o+p ≥ 4; a+b = 1; c+d = 2; e+f =
3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ X gleich oder unterschiedlich sind
und
III. Hilfs- und Zusatzstoffe,
bei Einhaltung einer Temperaturobergrenze von 140 °C, in beheizbaren Knetem, insbesondere Extrudern.

34. Verfahren zur Herstellung von Beschichtungen durch Verwendung einer Strahlen härtbaren Pulverlackzusammensetzung
enthaltend
I. ein Bindemittel bestehend aus
mindestens einer mit aktinischer Strahlung vernetzbaren Verbindung;
und
II. mindestens einer Verbindung, die polyedrische oligomere Silizium-Sauerstoff-Clustereinheiten aufweist, gemäß der Formel
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
mit a, b, c = 0-1; d = 1-2; e,f, g = 0-3; h = 1-4; m+n+o+p ≥ 4; a+b =1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind
und
III. Hilfs- und Zusatzstoffe.

35. Beschichtungen, hergestellt aus den Strahlen härtbaren Pulverlackzusammensetzungen nach mindestens einem der Ansprüche 1 bis 31.
